(19)

Europäisches
Patentamt
European
Patent Office
Office européen
des brevets

(11) **EP 2 587 321 A1**

(12) **EUROPEAN PATENT APPLICATION**

(43) Date of publication:
**01.05.2013 Bulletin 2013/18**

(51) Int Cl.:
**G05B 17/02** (2006.01)

(21) Application number: **11186499.7**

(22) Date of filing: **25.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventor: **Nguyen, Tu Duc
7075 Tiller (NO)**

Remarks:
Amended claims in accordance with Rule 137(2)
EPC.

(54) **Wave filtering using differential evolution for dynamic positioning systems**

(57)    It is described a method for deriving a filtered signal from a measurement signal indicative of a water wave motion, the method comprising: obtaining the measurement signal (105, 205); setting a plurality of parameter sets, wherein each parameter set (213) enables to define a parametrized model from which a predicted signal (235) can be derived; changing (245, 247) a parameter set (213) from the plurality of parameter sets to obtain a changed parameter set (251); selecting (249), based on a cost function value criterion, either the changed parameter set or the parameter set for which the changed parameter set was obtained for forming a next plurality of parameter sets; and deriving the filtered signal (109, 509) based on the next plurality of parameter sets.

FIG 3

EP 2 587 321 A1

## Description

Field of invention

The present invention relates to a method and to an arrangement for deriving a filtered signal from a measurement signal indicative of a water wave motion and also to a vessel including the arrangement, in particular for dynamic positioning the vessel on the sea.

Art Background

A dynamic positioning system (DPS) is a system which is capable to automatically keep a vessel or a ship or a offshore structure at a fixed position using the thrust of propellers or thrusters without using a fixing means, such as an anchor. Dynamic positioning may either be absolute in that the position of the vessel or the ship or the offshore structure is locked to a fixed point over the sea bottom, or relative to a moving object like another ship or offshore structure. It may further be possible to position the ship, vessel or offshore structure at a determined or predefined angle towards the wind and towards the waves on the sea.

There may be a need for a method and an arrangement for deriving a filtered signal from a measurement signal indicative of a water wave motion in order to derive a filtered signal which may be used in particular for dynamic positioning a vessel on the sea. Further, there may be a need for a vessel being adapted for accurate dynamic positioning.

Summary of the invention

The need is satisfied by the subject-matter of the independent claims. The dependent claims specify particular embodiments.

According to an embodiment of the present invention a method for deriving (in particular comprising computing, outputting, and/or calculating) a filtered signal (for example an electrical signal or an optical signal from which a portion, such as particular frequency components, of the original measurement signal have been removed or at least reduced) from a measurement signal (in particular obtained using a measurement, such as a displacement measurement, a position measurement and/or a heading direction measurement) indicative of a water wave motion (in particular a water wave on the sea) is provided. Thereby, the method comprises obtaining (in particular comprising receiving via an electrical and/or optical line or wirelessly receiving) the measurement signal (in particular from a measurement sensor); setting (in particular comprising initializing, in particular in a storage device, such as an electronic storage device) a plurality of parameter sets (each parameter set comprising a number of parameters, such as between five and fifty parameters, in particular between two and ten parameters), wherein each parameter set enables to define a parametrizable or parametrized model (in particular a mathematical model and/or a physical model) from which a predicted signal (intended to reproduce the measurement signal) can be derived (in particular comprising computations, in particular solving an optimization problem); changing a (or at least one) parameter set (or in particular a number (or all) of the parameter sets from the plurality of parameter sets) from the plurality of parameter sets to obtain a changed parameter set (in which at least one parameter has been changed or in which a number of parameters have been changed or in which all parameters have been changed). Further, the method comprises selecting either the changed parameter set (comprising the predefined number of parameters defining the model parametrized with the respective parameter set) or the parameter set (prior to the changing) for which the changed parameter set was obtained for forming a next plurality of parameter sets (wherein in particular the forming the next plurality of parameter sets comprises selecting other changed parameter sets or selecting those parameter sets for which the other changed parameter sets were obtained). Further, the method comprises deriving (in particular comprising applying the model now defined by the next plurality of parameter sets or defined by the particular parameter set of the next plurality of parameter sets that, used for parametrization of the model, best reproduces the measurement signal) the filtered signal based on the next plurality of parameter sets.

In particular, the filter signal may be derived using a particular parameter set for which the measurement signal is reproduced best using the model parametrized with this particular parameter set. In particular, the filtered signal may be used as an input signal for thrusters or propellers or to a dynamic positioning system controlling thrusters or propellers. In particular, in the filtered signal a high frequency component of the water wave motion is reduced or even removed. Thereby, the filtered signal is better suitable as an input signal for a dynamic positioning system than the original measurement signal potentially harbouring high frequency components of the water wave motion and potentially also harbouring noise or an error signal.

Thereby, the parameter set which best fits the measurement signal may be improved in a cyclic manner or in an iterative manner. A criterium may be set when to stop the iteration. The criterium may for example comprise an evaluation of a distance between the measurement signal and the predicted signal as derived from the model with the particular parameter set.

Thereby, a reliable method for deriving the filtered signal may be provided which does not set strict requirements on the measurement signal. Thereby, a dynamic positioning system may be improved for positioning a number of different vessels.

The method may be applied to a wide range and diversity of ship types and functions using DPS, e.g.: coring, platform supply, shuttle tanker off take, floating production, heavy lift cargo transport, exploration drilling, production drilling, diver support, pipeline, rocket launch platform positioning, repair/maintenance support to military vessels, ship-to ship transfer, pre and post operational survey, multi-role, accommodation services, hydrographic survey, wreck survey, savage and removal, dredging, rock dumping, sub-sea installation, lifting, well simulation and work over, passenger cruises , mine countermeasures, oceanography research, and seabed mining.

According to an embodiment of the present invention each parameter set comprises a first parameter sub set (in particular comprising three parameters) defining a first portion of the water wave motion having a first frequency and a second parameter sub set defining a second portion of the water wave motion having a second frequency, wherein the second frequency is smaller, in particular between two times and one hundred times smaller, further in particular between two times and ten times smaller, than the first frequency, wherein in particular each parameter set further comprises a third parameter sub set defining noise of the measurement signal.

In particular, the filtered signal may be associated with the second parameter sub set. In particular, by iteratively changing parameter sets from the plurality of parameter sets and selecting either the changed parameter set or the parameter set prior to the changing the second parameter sub set also the first parameter sub set may be derived, in order to obtain the filtered signal. Thereby, the filtered signal may be easily obtained, thus simplifying the method.

According to an embodiment of the present invention, wherein the first parameter sub set comprises a first amplitude, the first frequency and a first phase of the first portion of the water wave motion, wherein the second parameter sub set comprises a second amplitude, the second frequency and a second phase of the second portion of the water wave motion, wherein the parametrized model (parametrized with the best fitting parameter set) comprises a sum of a first sine wave and a second sine wave, the first sine wave having the first amplitude, the first frequency and the first phase, the second sine wave having the second amplitude, the second frequency and the second phase, wherein the first sine wave describes the first portion of the water wave motion and the second sine wave describes the second portion of the water wave motion. As an alternative the parametrized model may comprise a sum of a first cosine wave and a second cosine wave, wherein the first cosine wave describes the first portion of the water wave motion and the second cosine wave describes the second portion of the water wave motion. Compared to using a first sine wave and a second sine wave for establishing the model using a first cosine wave and a second cosine wave only requires adapting the first phase and the second phase. In particular, a cosine wave or a sine wave describes the physical situation of the water wave motion in an appropriate way. Thereby, the accuracy of the method may be improved. Further, the number of parameters may be kept at a low number, such as between five and ten parameters. Thereby, a number of measurement points required to adapt the parameter set may be restricted.

According to an embodiment of the present invention the setting the plurality of parameter sets comprises randomly setting parameters comprised in each parameter set within predetermined bounds. For example, the amplitude of the sine wave of the cosine wave may be bounded within expected limits or previously observed water waves. Further, the frequency, i. e. the first frequency and the second frequency may be bound to be within expected frequency limits known to occur in a typical water wave motion (e.g. on the sea). By setting the initial values of the parameters comprised within the parameter sets a converging time of the method may be reduced. Thereby, the method may be accelerated, such that the method in particular may be applied online on a vessel which is dynamically positioned using the filtered signal which is output by the described method.

According to an embodiment of the present invention the changing the parameter set comprises adding a uniformly distributed random variable to at least one parameter comprised in the parameter set to obtain a mutated parameter. A uniformly distributed random variable is a random variable which may assume values within a given range with a same probability. Alternatively or in addition a mutated parameter may be derived from a number of same parameters in different parameter sets, wherein the same parameters of the different parameter sets may be mathematically combined (in particular comprising forming a sum/or forming a difference). Thereby, the changing the parameter set may be simplified for simplifying the method.

According to an embodiment of the present invention the changing the parameter set comprises changing all parameters comprised in the parameter set. Alternatively, only one parameter comprised in the parameter set may be changed or a number of parameters comprised in the parameter in the parameter set may be changed. If it is for example known that a particular parameter or a number of particular parameter in the parameter set are already accurate enough, these particular parameters may be maintained constant, while other parameters in the parameter set may be changed. Thereby, a converging time of the method may be reduced.

According to an embodiment of the present a cost function may be defined, wherein the selecting (either the changed parameter set or the parameter set prior to the changing) comprises evaluating the cost function using as arguments the parameter set and the measurement signal or the predicted signal and the measurement signal and evaluating the cost function using as arguments the changed parameter set (or the predicted signal derived from the model parametrized with the changed parameter set) and the measurement signal.

Thereby, the cost function may be defined to penalize those parameter sets which lead to parametrized models which output a predicted signal which deviates to a large extend from the measurement signal. Thereby, a rational way to distinguish a bad parameter set from a good parameter set is provided. Thereby, the accuracy of the method may be improved.

According to an embodiment of the present invention the changed parameter set is selected, if the cost function evaluated on the changed parameter set (as an argument to the cost function, or using the predicted signal based on the parameter set as an argument to the cost function) is smaller than the cost function evaluated on the parameter set (or the therefrom derived predicted signal as an argument to the cost function) before the changing. Thereby, the method may be further simplified.

According to an embodiment of the present invention the cost function evaluates a distance between the measurement signal and the predicted signal (which is derived given a parameter set which is applied to define the model). The distance may be evaluated as an absolute value of the difference between the measurement signal and the predicted signal, if the measurement signal and the predicted signal are both scalar values. Alternatively, when the measurement signal and the predicted signal are vector quantities (having several components, such as between two and fifty components (in particular representing different time points) the distance between the measurement signal and the predicted signal may be calculated using a vector norm of the vector difference between the measurement signal and the predicted signal. Thereby, the method may be further simplified.

According to an embodiment of the present invention the distance is calculated using an Euclidian norm between the measurement signal and the predicted signal. Thereby, the method may further be simplified.

According to an embodiment of the present invention the measurement signal (indicative of the water wave motion) comprises measurement information across plural different time points (in particular successive time points which are spaced apart by a same time interval) and the predicted signal comprises prediction information across the plural different time points.

Thereby, an accuracy of decomposing the water wave motion in the first portion of the water wave motion and the second portion of the water wave motion may be improved. In particular, for assigning a particular frequency to the first portion of the water wave motion or the second portion of the water wave motion a sufficient number of sampling points according to the Shannon theorem are required. In particular, the sampling frequency must be roughly too times as high as the highest frequency which can be derived from the measurement samples at the different time points. Further, the higher the number of measured time points of the measurement signal is the more accurate the best fitting parameter set may be derived.

According to an embodiment of the present invention the measurement signal comprises information about position (in particular X, Y, Z positional information, describing horizontal position and/or vertical position) and/or heading (describing a moving direction) of a vessel on water (such a the sea) having the water wave motion.

According to an embodiment of the present invention a differential evolution (DE) technique is applied (wherein the plurality of parameter sets may form a population which develops in a differential fashion in order to minimize the cost function) is applied, wherein the parameter set resulting in the smallest value of the evaluated cost function is used (to finally parametrize the model) to derive the filtered signal. In particular, the parameter set resulting in the smallest value of the evaluated cost function may represent the final model of the water wave motion. In particular, the parameter set resulting in the smallest value of the evaluated cost function may reproduce the measurement signal best compared to all other parameter sets.

It should be understood that features (individually or in any combination) disclosed, described, mentioned, employed and/or provided for a method for deriving a filtered signal from a measurement signal may also be applied, used for, employed or provided (individually or in any combination) to an arrangement for deriving a filtered signal according to an embodiment of the present invention and vice versa.

According to an embodiment of the present invention it is provided an arrangement for deriving a filtered signal from a measurement signal indicative of a water wave motion, the arrangement comprising: an input terminal for obtaining the measurement signal; and a processor which is adapted to set a plurality of parameter sets, wherein each parameter set enables to define a model parametrizable with the parameter set from which parametrized model a predicted signal can be derived; to change a parameter set from the plurality of parameter sets to obtain a changed parameter set; to select either the changed parameter set or the parameter set for which the changed parameter set was obtained for forming a next plurality of parameter sets; and to derive the filtered signal based on the next plurality of parameter sets.

According to an embodiment a vessel (in particular a ship, an offshore platform or offshore structure) including an arrangement according to an embodiment as described above, in particular for dynamic positioning the vessel when swimming on water is provided. Thereby, a control system of the dynamic positioning system may be supplied with the filtered signal which is output from the arrangement for deriving the filtered signal. In particular, in the filtered signal, a high frequency component or portion of the water wave motion may be reduced or even removed, such that the dynamic positioning may be performed in a more accurate manner.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

Brief Description of the Drawings

Fig. 1          illustrates graphs explaining a water wave motion used in embodiments of the present invention;

Fig. 2          schematically illustrates a method for deriving a filtered signal according to an embodiment of the present invention;

Fig. 3          schematically illustrates a functional block of the method scheme illustrated in Figure 2;

Fig. 4          schematically illustrates an application of a method and an arrangement according to embodiments of the present invention;

Figs. 5 to 8    illustrate graphs derived or analysed during a method for deriving a filtered signal according to an embodiment of the present invention.

Detailed description

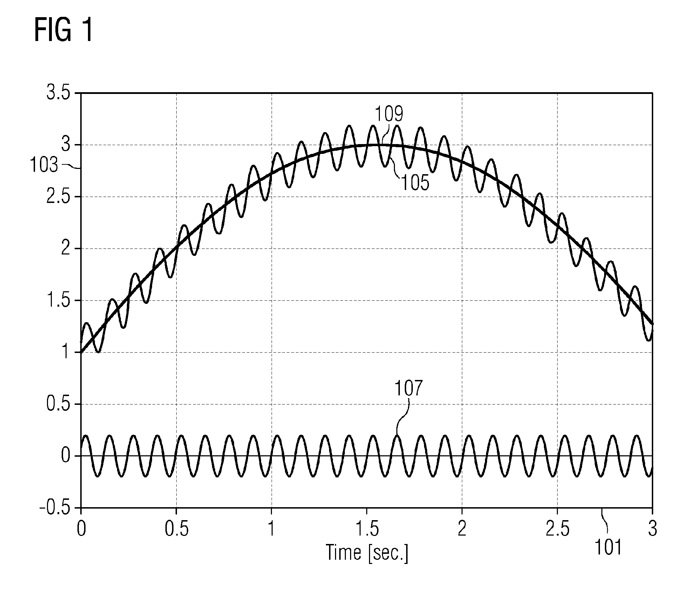

Figure 1 illustrates graphs for explaining a water wave motion and a measurement signal measured thereform which may be used in an embodiment of a method for deriving a filtered signal. In Figure 1 an abscissa 101 indicates the time in seconds and an ordinate 103 indicates a displacement of a surface of water (such as in the sea) in arbitrary units.

A curve 105 depicts a measurement signal indicative of a (vertical displacement of a) water wave motion, wherein the water wave motion comprises a first portion as illustrated by curve 107 and also comprises a second portion as illustrated by curve 109. In particular the curve 105 is obtained as a sum of the curve 107 and 109. As can be seen by comparing the frequencies of the curve 107 and 109 the first portion of the water wave motion (curve 107) has a frequency which is about fifty times higher than the frequency of the second portion of the water wave motion (depicted as curve 109).

What is actually measured by the position sensor is the measurement signal 105. In order to dynamically position the vessel only the slowly varying disturbances represented by the second portion of the water wave motion should be counteracted by the propulsion system (i.e. by the thrusters and propellers of the vessels), whereas the high frequency oscillations represented by the first portion 107 of the water wave motion should be reduced.

Therefore, in embodiments of the present invention the first portion (also refer to as WF-motion portion) and the second portion (also refer to as LF-motion portion) are identified or determined and the first portion of the water wave motion is considerably decreased in amplitude for obtaining a filtered signal which is then supplied to the dynamic positioning control system.

Often, measurements of the vessel velocities are not available. Hence, estimates of the velocities need to be computed from noisy position and heading measurements through a state observer. Unfortunately, the position and heading measurements are corrupted with colored noise due to waves and ocean currents as well as sensor noise resulting in a measurement signal such as curve 105 in Fig. 1. However, only the slowly varying disturbances (i.e. corresponding to curve 109) should be counteracted by the propulsion system, whereas the oscillatory motion (curve 107) due the waves (i.e. first-order wave disturbances) should not enter the feedback loop of the DPS. Thus, this curve 107 should be identified and removed from the measurements 105 before it enters the controllers as a filtered signal.

The total motion of a vessel can be considered as a sum of the LF-motion (curve 109) and the WF-motion (curve 107). Note that the first order WF-motion is oscillatory.

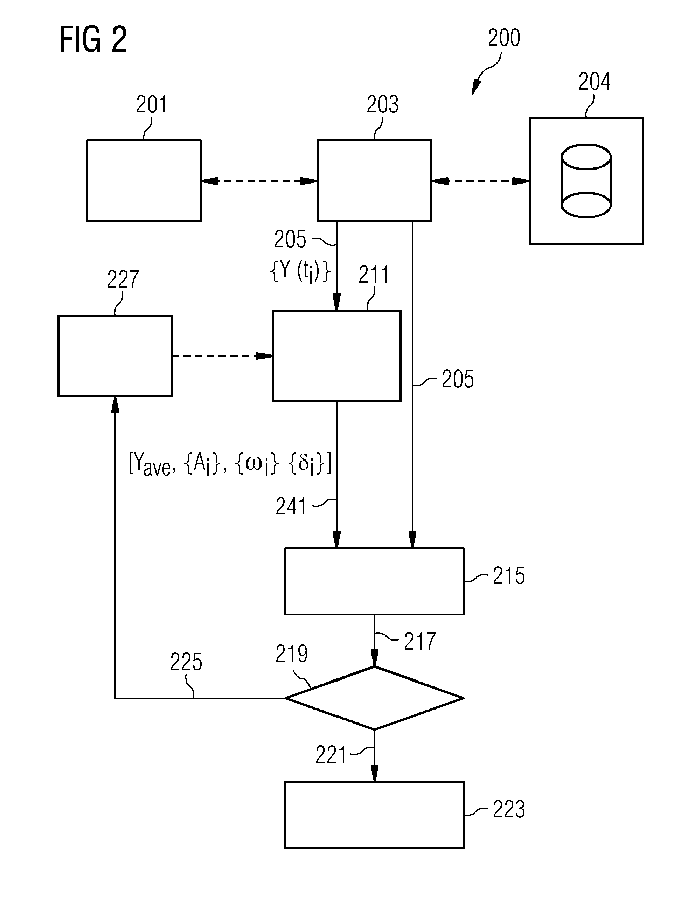

Figure 2 schematically illustrates a method scheme for identifying the first portion and the second portion of the water wave motion (i. e. the WF-motion portion and the LF-motion portion) according to an embodiment of the present invention.

A vessel 201 is swimming on the sea without an anchor and is held in position using dynamic positioning. For measuring position and having data and administrating data and processing data the vessel 201 comprises or is in communication with an information management system 203 which is adapted to communicate with a database 204. The information management system 203 measures and outputs (time dependent) measurement data 205 and supplies these measurement data or this measurement signal 205 to a block 211 for identifying the first motion portion (WF-motion portion) and the second motion portion (LF-motion portion) of the measurement signal 205 using differential evolution.

Thereby, the block 211 outputs a optimized parameter set 241 defining a physical model of the water wave motion by parametrizing a parametrizable model with the parameter set 241. A validation block 215 validates the optimized parameter set 241 supplied from the identification block 211 and outputs a validation result 217 to a decision block 219 which decides, whether the parameter set 241 is good enough to reproduce the measurement signal 205. If this is the case the decision block branches to the branch 221 and indicates in an indication block 223 that the parameter set 213 is accepted.

If the decision block 219 decides that the model parametrized by the parameter set 241 is not accurate enough (in particular it does not reproduce the measurement signal 205) than it is branched into the branch 225 which leads to a block 227 which modifies the underlying model and also the parameter set 241 or creates a new parameter set and which in particular modifies thereby the predicted signal derived within the parametrized model. The block 227 may also alter the underlying basic model.

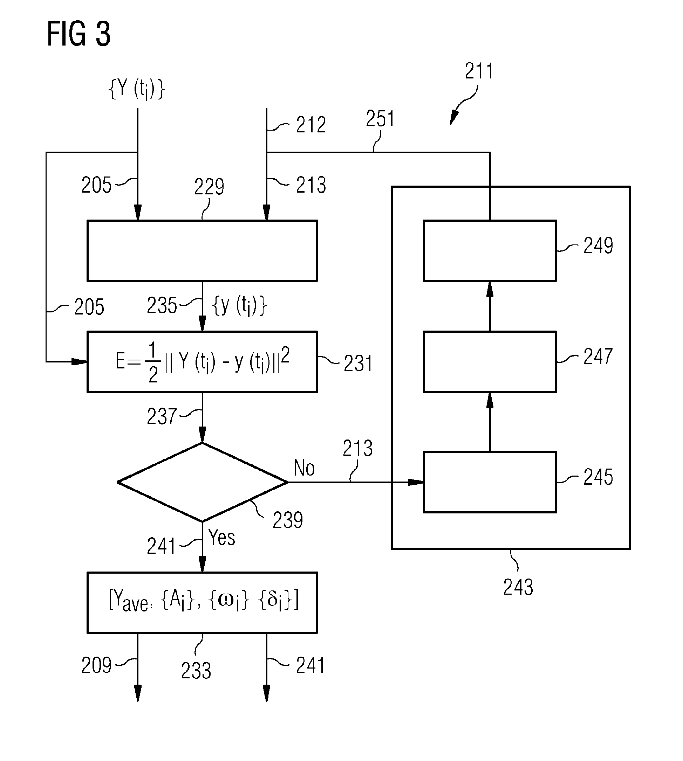

Figure 3 schematically illustrates the identification module 211 depicted in the method scheme of Figure 2. The idenification block 211 illustrated in Figure 3 comprises a numerical integrator 229, a cost function calculation module 231 and an optimization problem solver 233. The numerical integrator 229 receives the measurement signal 205, applies the model using the changed parameter set 251 or an initialization parameter set 212 (defining a current parameter set 213) and derives a predicted signal 235 which should ideally equal to the measurement signal 205, if the applied model and the applied parameter set is correct.

The cost function calculation module 231 then calculates the cost function based on the measurement signal 205 and the predicted signal 235.

Thereby, the cost function calculation module 231 outputs an error value 237 which is supplied to a decision block 239 comprising one or more stop criteria. If the error value 237 is low enough (e.g. lower than a predetermined threshold), the method proceeds to the optimization problem solver 233 which solves the optimization problem using differential evolution algorithms. Thereby, the optimized parameter set 241 is output by the optimization problem solver 233. Further, the solver 233 output a filtered signal 209 by extracting the interesting portion from the model parametrized with the optimized parameter set 241.

If the error value 237 is not low enough the method branches to change the current parameter set 213 using the changer module 243. Thereby, the changer module 243 comprises a mutation module 245, a recombination module 247 and a selection module 249. These three modules within the changer module 243 adjust the parameter set in order to minimize the cost function or the model error. Thereby, a changed parameter set 251 is output by the changer module 243 and supplied to the numerical intergrator module 229 as (new) current parameter set 213. The numerical intergrator block 229 in turn uses the changed parameter set 251 in order to derive the predicted signal 235.

The method continues to change the parameter set in an iterative manner, until the error value 237 falls below a predetermined threshold, for example.

Wave Identification may by performed using Differential Evolution.

The wave identification problem can be formulated as an optimization task where the objective is to find a model and a set of parameters 241 that minimize the prediction error 237 between the measured data 205 and the model output 235. Here, a subclass of evolutionary approach, namely, Differential Evolution (DE) is applied. The algorithms consist of four basic steps:

- initialization
- mutation
- crossover
- selection

First, a fixed number of vectors 212 which forms a population are randomly initialized. This set of vectors contains potential solutions within an n-dimensional search space. Next, this population evolves over time to explore the search space and try to locate the minima of the cost function. At every iteration, which also called generation, new vectors are generated by the combination of vectors randomly chosen from the current population (mutation). The outcoming vectors are then mixed with a pre-determined target vector. This operation is called recombination or crossover and produces the trial vector.

Finally, the trial vector is accepted for the next generation if and only if it yields a reduction in the value of the cost function. The last operation is referred as selection. Each of the four basic steps are given in more details below.

There are several versions of DE. They differ only by how new solutions are generated. Here, the classic version (DE/rand/1/bin) may be used. In this shorthand notation, the first term after "DE" specifies how the base vector is chosen and it means that the base vectors are randomly chosen. The number that follows indicates how many vector differences are used. The DE version that uses uniform crossover is appended with the additional term "bin" for "binomial" or uniform distribution.

To establish a starting point for the optimization process, an initial population 212 must first be created.

Typically, each decision parameter in every vector of the initial population is assigned a randomly chosen value from within its corresponding feasible bounds,

$$x_{0,j} = x_j^{(lo)} + \text{rand}[0,1] \bullet \left( x_j^{(up)} - x_j^{(lo)} \right)$$

where $x_j^{(up)}$ and $x_j^{(lo)}$ are the upper and lower bound to the jth decision parameter, respectively. After that the initial population is created, it evolves through the operation of mutation, crossover and selection.

Mutation generally refers to an operation that adds a uniform random variable to one or more vector parameters. The DE relies upon the population itself to supply increments of the appropriate magnitude and orientation. At every generation g, each vector in the population has to serve once a target vector. For each target vector $x_{g,j}$ a mutant vector is generated according to:

$$m_j = x_{g,r_3} + \gamma \left( x_{g,r_1} - x_{g,r_2} \right)$$

where $x_{g,r1}$, $x_{g,r2}$, $x_{g,r3}$ are randomly chosen vectors from the set $\{1,..., N\}$, N is the population size, y being within the interval $(0,1]$ is the mutation scaling factor, and the subscript g denotes the generation number.

To increase the diversity of the generated vectors, the crossover operation is introduced, Finally, the trial vector $u_{g+1,j}$ is created by mixing the parameter of the parent vector $x_{g,j}$ and the mutant vector $m_j$ in the following form,

$$u_{g+1,j} = \begin{cases} m_j & \text{if} \quad rand_j[0,1] \vee j = j_r \\ x_{g,j} & \text{otherwise} \end{cases}$$

where $rand_j[0,1)$ generates a new uniformly distributed random number for each value of the j within the range of $[0,1)$, $p_r$ is known as a crossover rate. The index $j_r$ is randomly chosen from the set $\{1, ..., D\}$, which is used to ensure that $u_{g+1,j}$ gets at least one parameter from $m_j$. The index D shows the number of the parameters.

To decide whether or not it should become a member of the next generation, the trial vector $u_{g+1,j}$ is compared to the target vector $X_{g,j}$ using a cost function value criterion. An individual (vector) with a minimum value of cost-function is allowed to advance to the next generation, i.e. $x_{g+1,j} = u_{g+1}$, if $F_{DE}(u_{g+1,j}) \leq F_{DE}(X_{g+1,j})$, else $x_{g+1,j} = x_{g,j}$, where, $F_{DE}$ (.) indicates the cost function and $x_{g+1,j}$ is the next generation of vector $x_{g,j}$. By using this selection procedure, all individuals of the next generation are as good as or better than the individuals of the current population.

Further, identification of characteristics of sea wave using DE is applied. Given data 205 from position or/and heading measurements of the vessel, let say $\{Y(t_i)\}$. The phases for identifying the characteristics of the LF-and WF-motion using DE are evident from Figure 2 and Figure 3. As a starting point the method uses an approximate model of the LF- and WF-component. The output of the model $\{y(t_i)\}$ is then calculated and compared with the experimental data

$\{Y(t_i)\}$. A cost function is then applied to calculate the quality of $\{y(t_i)\}$ compared to $\{Y(t_i)\}$. Here, the 2-norm is used as the cost function, i.e. $E = sqrt(abs(Y(t_i) - y(t_i)))$. This forms an optimization problem which is solved by using DE.

Construction of model from data involves three basic entities:

- A data set $\{Y(t_i)\}$ (in particular for different time point i).
- A model of LF-and/or WF-motion.
- A rule by which candidate models can be assessed using the data.

Identification of the LF- and/or WF-component using DE is applied as illustrated in Figure 2.

Step 1: The data record/Data from IMS-system is input. The position and heading $\{Y(t_i)\}$ of the vessel 201 are collected, recorded, and handled by an information management system (IMS) 203. The user selects a set of data 205 from the IMS 203 and feeds it into the wave identification module 211.

Step 2: Selection of model structure of the LF-and WF-motion is performed. In addition to the raw data $\{Y(t_i)\}$ in step 1, the user has to specify a model structure of the LF-and/or WF-motion, e.g.

$$h_w(s) = \frac{\sigma s}{s^2 + 2\varsigma\omega_0 s + \omega_0^2}$$

is often adequate and sufficient to described the LF-and/or WF-component.

Step 3. Determining the "best" model based on the data set $\{Y(t_i)\}$ is performed. Here, the assessment of model quality is based on how the models perform when they attempt to reproduce the measured data. The output of the "wave identification using DE"-module is a vector containing value of the system parameters $\{Y_{ave}, [Ai], [\omega_j], [\delta_j]\}$, where $Y_{ave}$ denotes the average value of $\{Y(t_i)\}$, and $[A_j], [\omega_j], [\delta_j]$ denote the amplitude, frequency and phase of the wave component i, respectively.

Step 4. Model Validation is performed as follows. After the first three steps, a particular model is obtained. This model is the one in the set of models that best describes the data set $\{Y(t_i)\}$ according to the chosen criterion. Now it remains to test whether the model is "good enough". This is a model validation test. If the model passes a model validation test, then the identification loop will be determined; or else one has to go back and revise the various steps of the procedure.

The Numerical integrators 229 in Fig. 2 are used to solve differential equations (i.e. Runge-Kutta methods). This component solves the ordinary differential equations using to describe the LF-and/or WF-motion. The component generates an output-vector $\{y(t_i)\}$ representing a predicted signal. The output vector $\{y(t_i)\}$ together with the raw data $\{Y(t_i)\}$ will be used to establish a cost function in the next step.

Calculation of cost function is performed as follows in component 231. There are many ways to define a cost function for this problem. Here, the 2-norm of the estimation error is used, i.e.

$$E = \frac{1}{2}\sum_{i=1}^{M}\left\|Y(t_i) - y(t_i)\right\|^2$$

$$E = \frac{1}{2M} \sum_{i=1}^{M} \left\| Y(t_i) - y(t_i) \right\|^2$$

where $\|\cdot\|$ denotes the 2-norm of a vector, $\{Y(t_i)\}$ is the data from the sensor at time $t_i$, $\{y(t_i)\}$ is the output of the model at time $t_i$, and M denotes the number of samples (i.e. the length of the data series).

Then, solving optimization problem using Differential Evolution is performed in component 233. This component solves the optimization problem using Differential Evolution algorithms, i.e.

$$x^{opt} = \min_{x} E(x)$$

where the cost function E(x) is defined above,

$$x = [Y_{ave}, \{A_i\}, \{\omega_j\}, \{\delta_j\}]$$

and $x_{opt}$ (reference numeral 241 in Fig. 2, 3) is the optimal solution of the problem. As discussed above, DE is an iterative search technique consisting of four basic steps: initialization, mutation, crossover, and selection described above.

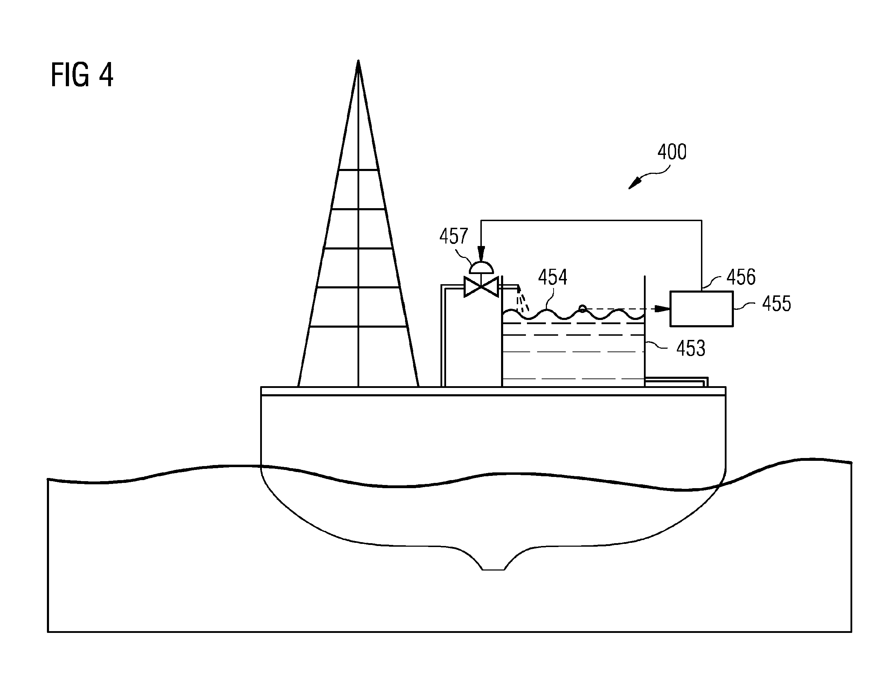

Figure 4 illustrates an application of a method for deriving a filtered signal according to an embodiment of the present invention for dynamically positioning a vessel 400. The vessel 400 may for example be a ship or a offshore structure. The vessel 400 comprises a container 453 comprising a liquid, wherein the level of the liquid 454 inside the container 453 is to be controlled. The level of the liquid 454 inside the container 453 may represent a measurement signal. The vessel 400 comprises a controller 455 for controlling the level of the liquid 454. Thereby, the controller controls actuators 457 which are supplied with a filtered signal which is derived according to methods of the present invention.

The slowly varying environmental disturbances of the water level should be identified and counteracted by the actuator, whereas the oscillatory motion due to the waves should be removed such that it does not enter the feedback loop. Hence, the LF- and WF-component are needed to be identified. Let the measurement of the level by given as,

$$Y(t) = Y_{ave} + A_0 \sin(\omega_0 t + \delta_0) + A_\infty \sin(\omega_\infty t + \delta_\infty) + e(t) \tag{$*$}$$

Where e(t) denotes white noise, (A0, $\omega$0, $\delta$0) represent the amplitude, frequency, and phase of the dominating wave component, and (A$\infty$, $\omega\infty$, $\delta\infty$) denote the amplitude, frequency, and phase of the oscillatory component which should be removed from the measurement yet before it enters the feedback loop. Let

$$A_0 = 4, \ \omega_0 = 2, \ \delta_0 = 1, \ A_\infty = 1, \ \omega_\infty = 10, \ \delta_\infty = 4, \ \text{and} \ Y_{ave} = 10$$

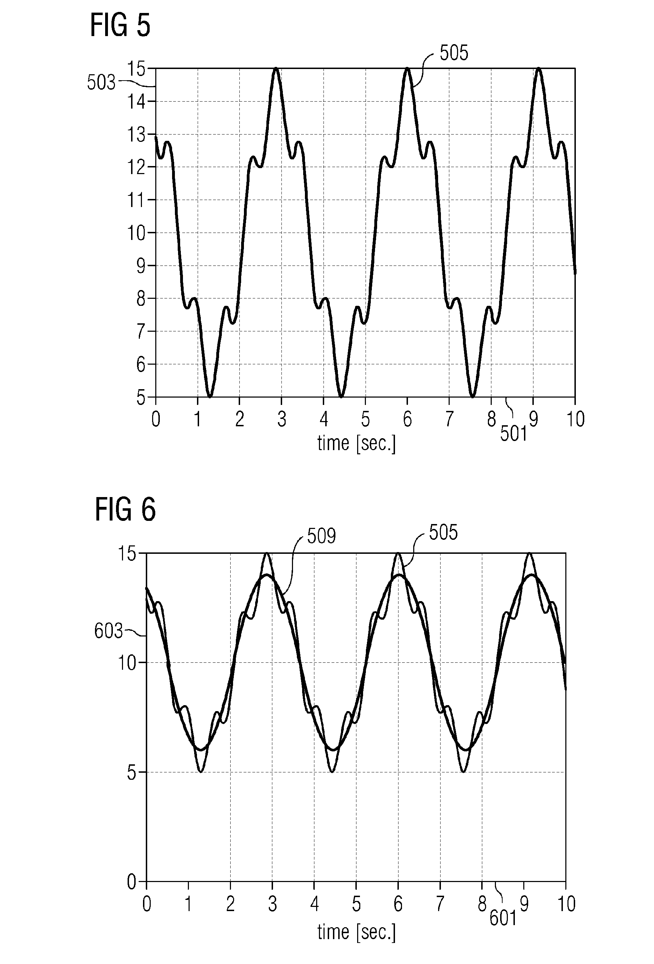

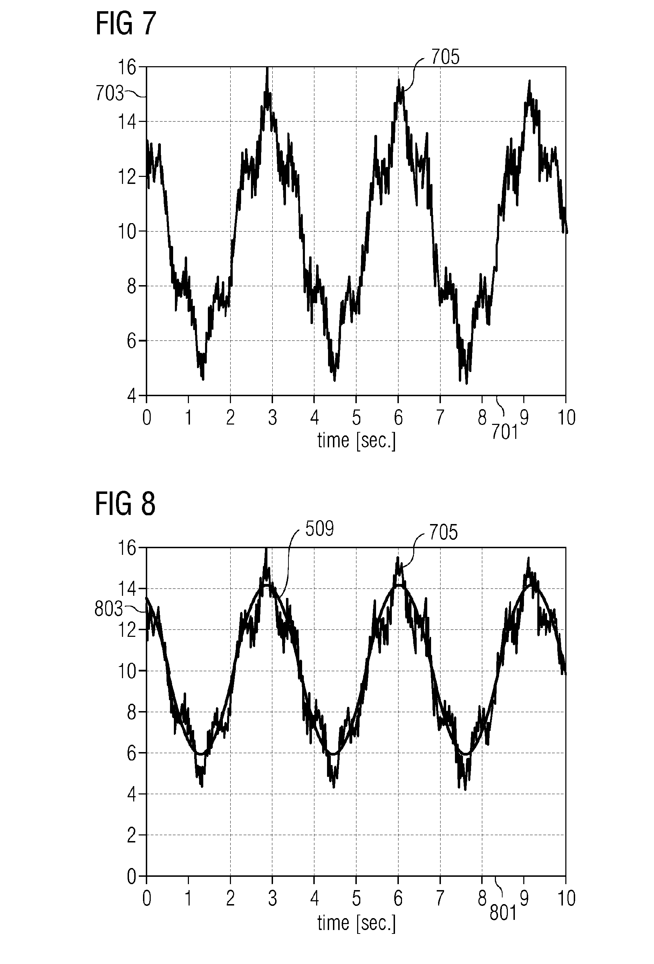

Figures 5 and 6 illustrate simulation results of the water wave motion, whereas Figures 7 and 8 illustrate the actual measurement signal. In particular, the abscissas 501, 601, 701, 801 illustrated in Figures 5 to 8, respectively, denote the time in seconds. Further, the ordinates 503, 603, 703 and 803 in Figures 5 to 8, respectively denote a displacement (of the water level in Fig. 4) in arbitrary units.

The curve 505 in Figures 5 illustrates the simulated water wave motion, whereas the actually measured water wave motion is depicted as curve 705 in Figure 7. Figure 6 illustrates as curve 509 the second portion of the water wave motion (i.e. the LF-motion portion) as simulated by the optimized model, whereas in Figure 8 the actually measured measurement signal 705 is overlaid over the curve 509. As can be seen from Figure 8, the simulated second portion of the water wave motion nicely fits the experimental data (curve 705). Thereby, the effectiveness of the proposed solution is clearly demonstrated.

The (final) (optimized) parameter set is given in the Table below:

| Case | $\hat{Y}_{ave.}$ | $\hat{A}_0$ | $\hat{\omega}_0$ | $\hat{\delta}_0$ | $\hat{A}_\infty$ | $\hat{\omega}_\infty$ | $\hat{\delta}_\infty$ |
|------|------|------|------|------|------|------|------|
| a | 9.9900 | 3.9889 | 2.0003 | 1.9992 | 1.0043 | 9.9911 | 4.0371 |
| b | 10.0296 | 3.9926 | 2.0007 | 1.9939 | 0.9839 | 9.9865 | 4.0395 |

Two cases are considered. In Case a, the white noise in equation (*) is ignored. In Case b, the noise in equation (*) is included.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method for deriving a filtered signal from a measurement signal indicative of a water wave motion, the method comprising:

   obtaining the measurement signal (105, 205);
   setting a plurality of parameter sets, wherein each parameter set (213) enables to define a parametrized model from which a predicted signal (235) can be derived;
   changing (245, 247) a parameter set (213) from the plurality of parameter sets to obtain a changed parameter set (251);
   selecting (249) either the changed parameter set or the parameter set for which the changed parameter set was obtained for forming a next plurality of parameter sets; and
   deriving the filtered signal (109, 209, 509) based on the next plurality of parameter sets.

2. Method according to claim 1, wherein each parameter set comprises
   a first parameter sub set ($A_\infty$, $\omega_\infty$, $\delta_\infty$) defining a first portion of the water wave motion having a first frequency and a second parameter sub set ($A_0$, $\omega_0$, $\delta_0$) defining a second portion of the water wave motion having a second frequency, wherein the second frequency is smaller, in particular between two times and hundred times smaller, further in particular between two times and ten times smaller, than the first frequency,
   wherein in particular each parameter set further comprises a third parameter sub set defining noise of the measurement signal.

3. Method according to claim 2,
   wherein the first parameter sub set comprises a first amplitude, the first frequency and a first phase of the first portion of the water wave motion,
   wherein the second parameter sub set comprises a second amplitude, the second frequency and a second phase of the second portion of the water wave motion,
   wherein parametrized model comprises a sum of a first sine wave and a second sine wave,
   the first sine wave having the first amplitude, the first frequency and the first phase,
   the second sine wave having the second amplitude, the second frequency and the second phase,
   wherein the first sine wave describes the first portion of the water wave motion and the second sine wave describes the second portion of the water wave motion.

4. Method according to one of the preceding claims, wherein the setting the plurality of parameter sets comprises randomly setting parameters comprised in each parameter set within predetermined bounds.

5. Method according to one of the preceding claims, wherein the changing the parameter set comprises adding a uniformly distributed random variable to at least one parameter comprised in the parameter set to obtain a mutated parameter.

6. Method according to claim 5, wherein the changing the parameter set comprises changing all parameters comprised in the parameter set.

7. Method according to one of the preceding claims, wherein the selecting comprises
evaluating (231) a cost function depending on the parameter set and the measurement signal and
evaluating (231) the cost function depending on the changed parameter set and the measurement signal.

8. Method according to claim 7, wherein the changed parameter set is selected, if the cost function evaluated on the changed parameter set is smaller than the cost function evaluated on the parameter set before the changing.

9. Method according to claim 7 or 8, wherein the cost function evaluates a distance between the measurement signal and the predicted signal.

10. Method according to claim 9, wherein the distance is calculated using an Euclidian norm between the measurement signal and the predicted signal.

11. Method according to one of the preceding claims, wherein the measurement signal comprises measurement information across plural different time points (ti) and the predicted signal comprises prediction information across the plural different time points.

12. Method according to one of the preceding claims, wherein the measurement signal comprises information about position and/or heading of a vessel on water having the water wave motion.

13. Method according to one of the preceding claims, wherein a differential evolution technique is applied, wherein the parameter set resulting in the smallest value of the evaluated cost function is used to derive the filtered signal.

14. Arrangement for deriving a filtered signal from a measurement signal indicative of a water wave motion, the arrangement comprising:

an input terminal (456) for obtaining the measurement signal; and
a processor (455) which is adapted
to set a plurality of parameter sets, wherein each parameter set enables to define a parametrized model from which a predicted signal can be derived; to change a parameter set from the plurality of parameter sets to obtain a changed parameter set;
to select either the changed parameter set or the parameter set for which the changed parameter set was obtained for forming a next plurality of parameter sets; and
to derive the filtered signal based on the next plurality of parameter sets.

15. A vessel (400) including an arrangement according to claim 14, in particular for dynamic positioning when swimming on water.

**Amended claims in accordance with Rule 137(2) EPC.**

1. Method for deriving a filtered signal from a measurement signal indicative of a water wave motion, the method comprising:

obtaining the measurement signal (105, 205);
setting a plurality of parameter sets, wherein each parameter set (213) enables to define a parametrized model from which a predicted signal (235) can be derived;
changing (245, 247) a parameter set (213) from the plurality of parameter sets to obtain a changed parameter set (251) ;
evaluating (231) a cost function depending on the parameter set and the measurement signal;
evaluating (231) the cost function depending on the changed parameter set and the measurement signal;
selecting (249) either the changed parameter set or the parameter set for which the changed parameter set was obtained for forming a next plurality of parameter sets, wherein the changed parameter set is selected, if the cost function evaluated on the changed parameter set is smaller than the cost function evaluated on the parameter set before the changing; and
deriving the filtered signal (109, 209, 509) based on the next plurality of parameter sets,
wherein each parameter set comprises
a first parameter sub set ($A_\infty$, $\omega_\infty$, $\delta_\infty$) defining a first portion of the water wave motion having a first frequency and a second parameter sub set ($A_0$, $\omega_0$, $\delta_0$) defining a second portion of the water wave motion having a second frequency, wherein the second frequency is smaller than the first frequency,
wherein the parametrized model modelling the measurement signal is given as:

$$Y(t) = Y_{ave} + A_0 \sin(\omega_0 t + \delta_0) + A_\infty \sin(\omega_\infty t + \delta_\infty) + e(t)$$ ,

wherein

$Y(t)$ denotes the measurement signal,
$e(t)$ denotes white noise,
$A_0$, $\omega_0$, $\delta_0$ represent the amplitude, frequency, and phase of the first portion of the water wave motion, and
$A_\infty$, $\omega_\infty$, $\delta_\infty$ denote the amplitude, frequency, and phase of the second portion of the water wave motion.

**2.** Method according to claim 1, wherein the second frequency is between two times and hundred times smaller, in particular between two times and ten times smaller, than the first frequency.

**3.** Method according to one of the preceding claims,
wherein the setting the plurality of parameter sets comprises randomly setting parameters comprised in each parameter set within predetermined bounds.

**4.** Method according to one of the preceding claims,
wherein the changing the parameter set comprises adding a uniformly distributed random variable to at least one parameter comprised in the parameter set to obtain a mutated parameter.

**5.** Method according to claim 4,
wherein the changing the parameter set comprises changing all parameters comprised in the parameter set.

**6.** Method according to one of the preceding claims, wherein the cost function evaluates a distance between the measurement signal and the predicted signal.

**7.** Method according to claim 6, wherein the distance is calculated using an Euclidian norm between the measurement signal and the predicted signal.

**8.** Method according to one of the preceding claims, wherein the measurement signal comprises measurement information across plural different time points ($t_i$) and the predicted signal comprises prediction information across the plural different time points.

**9.** Method according to one of the preceding claims, wherein the measurement signal comprises information about position and/or heading of a vessel on water having the water wave motion.

**10.** Method according to one of the preceding claims, wherein a differential evolution technique is applied, wherein the parameter set resulting in the smallest value of the evaluated cost function is used to derive the filtered signal.

**11.** Arrangement for deriving a filtered signal from a measurement signal indicative of a water wave motion, the arrangement comprising:

an input terminal for obtaining the measurement signal; and
a processor (455) which is adapted
to set a plurality of parameter sets, wherein each parameter set enables to define a parametrized model from which a predicted signal can be derived; to change a parameter set from the plurality of parameter sets to obtain a changed parameter set;
to evaluate (231) a cost function depending on the parameter set and the measurement signal;
to evaluate (231) the cost function depending on the changed parameter set and the measurement signal;
to select either the changed parameter set or the parameter set for which the changed parameter set was obtained for forming a next plurality of parameter sets, wherein the changed parameter set is selected, if the cost function evaluated on the changed parameter set is smaller than the cost function evaluated on the parameter set before the changing; and
to derive the filtered signal based on the next plurality of parameter sets,
wherein each parameter set comprises
a first parameter sub set ($A_\infty$, $\omega_\infty$, $\delta_\infty$) defining a first portion of the water wave motion having a first frequency and a second parameter sub set ($A_0$, $\omega_0$, $\delta_0$) defining a second portion of the water wave motion having a second frequency, wherein the second frequency is smaller than the first frequency,
wherein the parametrized model modelling the measurement signal is given as:

$$Y(t) = Y_{ave} + A_0 \sin(\omega_0 t + \delta_0) + A_\infty \sin(\omega_\infty t + \delta_\infty) + e(t) \qquad (*)$$

wherein

$Y(t)$ denotes the measurement signal,
$e(t)$ denotes white noise,
$A_0$, $\omega_0$, $\delta_0$ represent the amplitude, frequency, and phase of the first portion of the water wave motion, and
$A_\infty$, $\omega_\infty$, $\delta_\infty$ denote the amplitude, frequency, and phase of the second portion of the water wave motion.

**12.** A vessel (400) including an arrangement according to claim 11, in particular for dynamic positioning when swimming on water.

FIG 1

## FIG 2

200

201

204

203

205
$\{Y(t_i)\}$

211

227

$[Y_{ave}, \{A_i\}, \{\omega_i\} \{\delta_i\}]$

205

241

215

225

219

217

221

223

## FIG 3

$\{Y(t_i)\}$

212
251
211

205
229
213

205
235 $\{y(t_i)\}$

$E = \dfrac{1}{2}\,\|\,Y(t_i) - y(t_i)\|^2$ 231

249

247

237

No 213

245

239

241 Yes

243

$[Y_{ave},\ \{A_i\},\ \{\omega_i\}\ \{\delta_i\}]$

209
233
241

FIG 4

## FIG 5

## FIG 6

## FIG 7

## FIG 8

EP 2 587 321 A1

Europäisches
Patentamt

European
Patent Office

Office européen
des brevets

# EUROPEAN SEARCH REPORT

**Application Number**

EP 11 18 6499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PASCOAL AND C GUEDES SOARES R ET AL: "Ocean Wave Spectral Estimation Using Vessel Wave Frequency Motions", JOURNAL OF OFFSHORE MECHANICS AND ARCTIC ENGINEERING, AMERICAN SOCIETY OF MECHANICAL ENGINEERS, NEW YORK, NY, US, vol. 129, no. 2, 1 May 2007 (2007-05-01), pages 90-97, XP008149153, ISSN: 0892-7219, DOI: 10.1115/1.2426986 * page 90 - page 91 * * page 93 * | 1-15 | INV. G05B17/02 |
| A | NIELSEN ET AL: "Response-based estimation of sea state parameters-influence of filtering", OCEAN ENGINEERING, PERGAMON, AMSTERDAM, NL, vol. 34, no. 13, 29 June 2007 (2007-06-29) , pages 1797-1810, XP022135238, ISSN: 0029-8018, DOI: 10.1016/J.OCEANENG.2007.03.002 * page 1799 - page 1801 * | 1,2, 7-12,14, 15 | |
| | -/-- | | TECHNICAL FIELDS SEARCHED (IPC) G05B |

The present search report has been drawn up for all claims

| Place of search | Date of completion of the search | Examiner |
|---|---|---|
| The Hague | 23 February 2012 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

Europäisches
Patentamt

European
Patent Office

Office européen
des brevets

**EUROPEAN SEARCH REPORT**

Application Number

EP 11 18 6499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | E. A. Tannuri, J. V. Sparano, A. N. Simos, J. J. Da Cruz: "Estimating directional wave spectrum based on stationary ship motion measurements", Applied Ocean Research, vol. 25 8 April 2004 (2004-04-08), pages 243-261, XP002670214, DOI: http://dx.doi.org/10.1016/j.apor.2004.01.003 Retrieved from the Internet: URL:http://www.sciencedirect.com/science/article/pii/S0141118704000070 [retrieved on 2012-02-23] * page 243 - page 245 * ----- | 1,2, 7-12,14, 15 | |
| A | STORN RAINER ET AL: "Differential Evolution - A Simple and Efficient Heuristic for Global Optimization over Continuous Spaces", JOURNAL OF GLOBAL OPTIMIZATION, KLUWER, DORDRECHT, NL, vol. 11, no. 4, 1 December 1996 (1996-12-01), pages 341-359, XP008124915, ISSN: 0925-5001 * page 341 - page 346 * ----- -/-- | 1,4-11, 13-15 | TECHNICAL FIELDS SEARCHED (IPC) |

The present search report has been drawn up for all claims

| Place of search | Date of completion of the search | Examiner |
|---|---|---|
| The Hague | 23 February 2012 | Bassi, Luca |

EPO FORM 1503 03.82 (P04C01)

EP 2 587 321 A1

## EUROPEAN SEARCH REPORT

**Application Number**

EP 11 18 6499

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EDUARDO A TANNURI ET AL: "Dynamic Positioning Systems: Comparison Between Wave Filtering Algorithms and Their Influence on Performance", PROCEEDINGS OF THE 22ND INTERNATIONAL CONFERENCE ON OFFSHORE MECHANICS AND ARCTIC ENGINEERING, OMAE 2003 : PRESENTED AT THE 22ND INTERNATIONAL CONFERENCE ON OFFSHORE MECHANICS AND ARCTIC ENGINEERING, JUNE 8 - 13, 2003, CANCUN, MEXICO, NEW YORK, NY :, vol. 1, 8 June 2003 (2003-06-08), pages 109-117, XP008149154, ISBN: 0-7918-3681-9 * the whole document * | 1-15 | |
| A | TORSETNES G ET AL: "Nonlinear dynamic positioning of ships with gain-scheduled wave filtefing", DECISION AND CONTROL, 2004. CDC. 43RD IEEE CONFERENCE ON, IEEE, PISCATAWAY, NJ, USA, vol. 5, 14 December 2004 (2004-12-14), pages 5340-5347, XP010796471, ISBN: 978-0-7803-8682-2 * the whole document * | 1-15 | |
| | | | TECHNICAL FIELDS SEARCHED (IPC) |
| A | Thor I. Fossen: "A Survey on Nonlinear Ship Control: From Theory to Practice", IFAC Conference on Manoeuvring and Control of Marine Craft - MCMC 2000 , 23 August 2000 (2000-08-23), 25 August 2000 (2000-08-25), pages 1-16, XP002670215, Retrieved from the Internet: URL:http://www.itk.ntnu.no/ansatte/Fossen_ Thor/papers/mcmc2000a.pdf [retrieved on 2012-02-21] * the whole document * | 1-15 | |

The present search report has been drawn up for all claims

| Place of search | Date of completion of the search | Examiner |
|---|---|---|
| The Hague | 23 February 2012 | Bassi, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

22